# EUROPÄISCHE PATENTSCHRIFT

(11) **EP 2 620 302 B1**
(45) Veröffentlichungstag und Bekanntmachung des Hinweises auf die Patenterteilung: **26.06.2019**
(21) Anmeldenummer: 12198216.9
(22) Anmeldetag: 19.12.2012
(51) Int. Cl.: B60G 7/00, B60G 7/02, B62D 7/14, F16F 13/14, F16F 13/28

(54) **Hydraulisch dämpfendes Lager für ein Fahrwerk eines Fahrzeuges, insbesondere eines Kraftfahrzeugs, sowie Verfahren zur Veränderung der Position eines Fahrwerklagers**
Hydraulically damped bearing for a suspension of a vehicle, in particular of a motor vehicle, and method for changing the position of a suspension bearing
Palier à amortissement hydraulique pour un châssis de véhicule, en particulier d'un véhicule automobile, ainsi que procédé de modification de la position d'un palier de châssis

(30) Priorität: 27.01.2012 DE 102012001655
(43) Veröffentlichungstag der Anmeldung: 31.07.2013
(73) Patentinhaber: AUDI AG, 85045 Ingolstadt (DE)
(72) Erfinder: Conrad, Thomas, 91757 Treuchtlingen (DE); Unger, Wolfgang, 85080 Gaimersheim (DE); Schlecht, Albert, 86684 Holzheim (DE); Stocker, Markus, 94094 Rotthalmünster (DE)

(56) Entgegenhaltungen:
- EP-A2- 1 734 278
- DE-A1- 3 934 238
- DE-A1- 10 330 877
- DE-U1- 29 615 913
- JP-A- H1 058 934
- JP-A- S6 045 415
- JP-A- S6 322 712
- JP-A- S60 113 707
- JP-A- S63 231 032

## Beschreibung

Die Erfindung betrifft ein hydraulisch dämpfendes Lager für ein Fahrwerk eines Fahrzeugs, insbesondere eines Kraftfahrzeugs, nach dem Oberbegriff des Anspruchs 1 sowie ein Verfahren zur Veränderung der Position eines Fahrwerklagers in einem Fahrzeug, insbesondere in einem Kraftfahrzeug, nach dem Oberbegriff des Anspruchs 15.

Ein Lager nach dem Oberbegriff des Anspruchs 1 ist aus der JP S60 113707 bekannt.

Fahrwerklager müssen eine Vielzahl von Anforderungen erfüllen, wozu unter anderem die Aufnahme von Kräften, die Dämpfung von Schwingungen, die Fähigkeit zur elastischen Verformung und auch die Isolation von Geräusch gehören. Die gezielte Dämpfung von Schwingungen kann dabei zum Beispiel durch Verwendung von auch als Hydrolagern bezeichneten hydraulisch dämpfenden Lagern erzielt werden. Weiterhin gibt es Fahrsituationen, welche eine weiche statische Lagerkennlinie mit großem Verformungsweg erfordern, während hingegen bei anderen Fahrsituationen eine steife Lagerkennlinie mit geringem Verformungsweg erwünscht sein kann. Ein Beispiel für ein derartiges Lager ist aus der DE 103 30 877 A1 bekannt, bei der zwischen einer äußeren und einer inneren Lagerhülse ein Elastomerkörper angeordnet ist, in dem zwei mit Flüssigkeit gefüllte Kammern ausgebildet sind. Die Kammern sind voneinander getrennt und symmetrisch zu beiden Seiten der Längsachse der inneren Lagerhülse angeordnet und weisen jeweils einen Anschlag auf, der auf einer gemeinsamen Querachse der inneren Lagerhülse und im Abstand zu einer entsprechenden Gegenanschlagfläche innerhalb der Kammer angeordnet ist. Die Anschläge sind hier verschiebbar ausgebildet und derart mit Druck beaufschlagbar, dass sie entlang einer gemeinsamen Querachse verschoben werden können und die innere Lagerhülse gegenüber der äußeren Lagerhülse in einem aktuellen Schwingungszustand fixiert wird. Der zum Fixieren erforderliche Druck ist erst dann vollständig aufgebaut, wenn beide Anschläge an ihren Gegenanschlagflächen anliegen. Mit einem derartig ausgebildeten Fahrwerkslager soll die Lagersteifigkeit jederzeit um ein Vielfaches erhöht werden können.

Problematisch bei einem derartigen Lageraufbau ist jedoch, dass eine hohe Dämpfung von Schwingungen, wie zum Beispiel im Bereich der Achseigenfrequenzen des Fahrwerks, stets mit einer Erhöhung der dynamischen Steifigkeiten im höherfrequenten Bereich einhergeht, was auch als dynamische Verhärtung bezeichnet wird. Daraus resultiert schließlich eine verstärkte Übertragung von Geräuschen der Radaufhängung in die Karosserie, was unerwünscht ist. Zudem ist eine hohe Dämpfung bei hydraulisch dämpfenden Lagern nur in einem schmalen Frequenzbereich möglich. Des Weiteren kann es insbesondere in den auf Zug belasteten Kammern und einer damit einhergehenden Volumenvergrößerung dieser Kammern zum Auftreten von Unterdrücken kommen, die zu einer Kavitation im Kammerbereich und damit auch zu Beschädigungen des Lagers führen können. Abgesehen davon treten durch diese Kavitationsereignisse auch vom Fahrer wahrnehmbare und als extrem störend empfundene Geräusche auf.

Ein weiterer wesentlicher Nachteil derartiger herkömmlicher Lageraufbauten ist, dass zur Veränderung der Position eines derartigen Fahrwerklagers in einem Fahrzeug, was auch Wegverstellung genannt wird, in Verbindung mit einer hydraulischen Aktuatorik stets Aggregate zur Druckbereitstellung erforderlich sind, deren Platz- und Leistungsbedarf hoch ist. Eine Lösung mittels elektrischer Aktoren erfordert dagegen stets eine komplizierte Verstellmechanik.

Demgegenüber ist es Aufgabe der vorliegenden Erfindung, ein hydraulisch dämpfendes Lager für ein Fahrwerk eines Fahrzeugs, insbesondere eines Kraftfahrzeugs, zur Verfügung zu stellen, das bei relativ einfachem Aufbau auf funktionssichere Weise eine gewünschte Steifigkeitseinstellung ermöglicht, ebenso wie es eine für unterschiedliche Fahrsituationen gezielte Dämpfung von Schwingungen ermöglicht. Zudem ist es eine weitere Aufgabe der vorliegenden Erfindung, ein Verfahren zur Veränderung der Position eines Lagers, insbesondere eines Fahrwerklagers, in einem Fahrzeug, insbesondere in einem Kraftfahrzeug, zur Verfügung zu stellen, mittels dem die Veränderung der Position (Wegverstellung) des Lagers auf bauteiltechnisch einfache sowie funktionssichere Weise durchgeführt werden kann.

Diese Aufgabe wird gelöst mit den Merkmalen der unabhängigen Patentansprüche. Vorteilhafte Ausgestaltungen hierzu sind Gegenstand der darauf rückbezogenen Unteransprüche.

Gemäß Patentanspruch 1 wird ein hydraulisch dämpfendes Lager für ein Fahrwerk eines Fahrzeugs, insbesondere eines Kraftfahrzeugs, vorgeschlagen, das ein erstes Lagerteil aufweist, das mit einem ersten Bauteil verbunden ist, und das ein zweites Lagerteil aufweist, das mit einem zweiten Bauteil verbunden ist. Zwischen dem ersten Lagerteil und dem zweiten Lagerteil ist wenigstens ein Elastomerkörper angeordnet, der wenigstens zwei miteinander strömungstechnisch mittels einer Überströmeinrichtung verbundene sowie mit einer Flüssigkeit befüllte, insbesondere voneinander beabstandete, Kammern dergestalt wenigstens teilweise begrenzt, dass bei einer Relativbewegung zwischen dem ersten und dem zweiten Lagerteil und einer dadurch bedingten Druckbelastung und/oder Komprimierung wenigstens einer Kammer, die Flüssigkeit aus dieser wenigstens einen Kammer über die wenigstens eine Überströmeinrichtung in die wenigstens eine andere, vorzugsweise auf zugbelastete Kammer überströmt, wobei die Überströmeinrichtung zur Einstellung der Dämpfungscharakteristik des Lagers mit einer Ventileinrichtung zur Absperrung oder Regelung des Durchflusses durch die Überströmeinrichtung gekoppelt ist.

Erfindungsgemäß ist vorgesehen, dass jede der Kammern, mit einer, mittels einer Absperreinrichtung absperrbaren Ausgleichsvolumeneinrichtung gekoppelt ist, die zur Einstellung der Lagersteifigkeit mit dem jeweils zugeordneten Kammervolumen strömungstechnisch verbindbar ist.

Mit der vorliegenden Erfindungsidee wird somit die Steifigkeitsschaltung des Lagers funktionell von der Einstellung der Dämpfungscharakteristik des Lagers abgetrennt, wodurch sich erhebliche Freiheiten im Hinblick auf die Einstellung der Dämpfungscharakteristik und/oder der Einstellung der Lagersteifigkeit ergeben. So kann durch die mit der Überströmeinrichtung gekoppelte Ventileinrichtung zur Absperrung bzw. Regelung des Durchflusses durch die Überströmeinrichtung eine gezielte Einstellung des Dämpfungsmaximums vorgenommen werden, und zwar abhängig von den jeweils gerade vorherrschenden Fahr- bzw. Betriebsbedingungen.

Mit einer derartigen Ventileinrichtung zur Absperrung oder Regelung des Durchflusses durch die Überströmeinrichtung, das heißt mit einer derartigen variabel einstellbaren Ventileinrichtung, kann somit eine an die jeweilige Fahrsituation angepasste gezielte Dämpfung von Schwingungen ermöglicht werden, wobei gleichzeitig ein Zustand eingestellt wird, der die Isolation höherfrequenter Geräusche ermöglicht. Das heißt mit anderen Worten, dass hierdurch das Dämpfungsmaximum gezielt auf verschiedene Frequenzen gelegt werden kann.

Auf der anderen Seite kann alternativ oder aber auch zusätzlich dazu, und dies vor allem auch unabhängig von der Einstellung der Dämpfungscharakteristik, über die Ausgleichsvolumeneinrichtung eine einfache Einstellung der Lagersteifigkeit vorgenommen werden, zum Beispiel dergestalt, dass die Ausgleichsvolumina der Ausgleichsvolumeneinrichtung hinzu geschaltet werden, wodurch die Lagercharakteristik weicher eingestellt werden kann, was nachfolgend noch in Verbindung mit den konkreten Ausführungsformen näher beschrieben wird.

Mit einer derartigen erfindungsgemäßen Lösung wird somit insgesamt ein einfach aufgebautes, funktionssicheres hydraulisch dämpfendes Lager für ein Fahrwerk eines Fahrzeugs zur Verfügung gestellt, das stets optimal an die jeweilige Fahrsituation anpassbar ist.

Zudem können durch den erfindungsgemäßen Aufbau kritische Unterdrücke in den Kammern, insbesondere in den auf Zug belasteten Kammern vermieden werden, da durch entsprechende Ansteuerung der Ausgleichsvolumeneinrichtung sichergestellt werden kann, dass stets ausreichend Flüssigkeit in den Kammern vorhanden ist, was hilft, Kavitation zu vermeiden.

Mit der erfindungsgemäßen Lösung können zudem Positionsveränderungen auf einfache Weise energiesparend durchgeführt werden, ohne dass hier eine zusätzliche Aktuatorik etc. benötigt wird, was nachfolgend noch näher in Verbindung mit der erfindungsgemäßen Verfahrensführung erläutert wird.

Wie bereits zuvor erwähnt, kann es gegebenenfalls ausreichend sein, dass lediglich eine der Kammern mit einer Ausgleichsvolumeneinrichtung gekoppelt ist, wobei jedoch erfindungsgemäß vorgesehen ist, dass jede der Kammern mit einer Ausgleichsvolumeneinrichtung gekoppelt ist. Dadurch ergibt sich für viele Anwendungsfälle eine ausreichende Flexibilität bei der Einstellung der Lagersteifigkeit. Grundsätzlich ist es in diesem Zusammenhang auch möglich, nicht erfindungsgemäß lediglich eine einzige Ausgleichsvolumeneinrichtung vorzusehen, an die mehrere bzw. alle Kammern angeschlossen sind. Aus Gründen der Flexibilität im Hinblick auf die Zuschaltung der einzelnen Ausgleichsvolumina ist es jedoch bevorzugt und erfindungsgemäß, dass jeder Kammer ein eigenes Ausgleichsvolumen und damit eine eigene Ausgleichsvolumeneinrichtung zugeordnet ist.

Gemäß einer besonders bevorzugten konkreten Lagerausgestaltung wird vorgeschlagen, dass die jeder Ausgleichsvolumeneinrichtung zugeordnete Absperreinrichtung mit einer Steuereinrichtung, vorzugsweise einer elektrischen Steuereinrichtung gekoppelt ist, mittels der die Absperreinrichtung in Abhängigkeit von definierten Lagerzuständen so ansteuerbar ist, dass zum einen in einer Offenstellung der Absperreinrichtung die Strömungsverbindung zwischen der Ausgleichsvolumeneinrichtung und der jeweils zugeordneten Kammer in beide Strömungsrichtungen freigegeben ist. Dies ist insbesondere dann von Vorteil, wenn eine niedrigere Lagersteifigkeit gewünscht ist, da dann auf einfache Weise sichergestellt wird, dass bei einer entsprechenden Druckbelastung der Kammer die Flüssigkeit auf einfache Weise in das Zusatzvolumen bzw. Ausgleichsvolumen der Ausgleichsvolumeneinrichtung verdrängt werden kann. Andererseits kann bei einem schnellen Lastwechsel und einer weniger starken Druckbeanspruchung dann auch wieder auf schnelle und einfache Weise Flüssigkeit aus der Ausgleichsvolumeneinrichtung in die zugeordnete Kammer einströmen. Zum anderen kann alternativ dazu vorgesehen sein, dass in einer Schließstellung der Absperreinrichtung die Strömungsverbindung zwischen der Ausgleichsvolumeneinrichtung und der jeweils zugeordneten Kammer in eine Strömungsrichtung dergestalt gesperrt ist, dass lediglich Flüssigkeit aus der Ausgleichsvolumeneinrichtung in die jeweils zugeordnete Kammer einströmen kann. In dieser Schließstellung der Absperreinrichtung weist somit das Lager im Bereich der so abgesperrten Kammer eine hohe bzw. maximale Lagersteifigkeit auf, da das Überströmen der Flüssigkeit in die Ausgleichsvolumeneinrichtung unterbunden ist. Andererseits kann jedoch, durch die einseitig offene Strömungsverbindung von der Ausgleichsvolumeneinrichtung in die jeweils zugeordnete Kammer, auf einfache Weise sichergestellt werden, dass auch in dieser Schließstellung bei einer entsprechenden Zugkraftbeaufschlagung der Kammer, Flüssigkeit von der Ausgleichsvolumeneinrichtung in die Kammer nachströmen kann, so dass das Auftreten von Unterdrücken, die zu einer Kavitation und damit gegebenenfalls zu einer Beschädigung des Lagers führen können, zuverlässig vermieden werden.

Es versteht sich, dass zwischen den eben beschriebenen maximalen Stellungen (Offenstellung der Absperreinrichtung einerseits und Schließstellung der Absperreinrichtung andererseits) selbstverständlich jederzeit Stellungen der Absperreinrichtung möglich bzw. einstellbar sind, in denen die Absperreinrichtung mehr oder weniger offen bzw. geschlossen ist. Die Wahl der jeweiligen Zwischenstellung hängt in diesem Fall von der für die jeweilige Fahrsituation gewünschten Lagersteifigkeit ab, die zum Beispiel in einem Kennfeld einer Steuereinrichtung, bezogen auf unterschiedliche Fahrsituationen, abgelegt ist. Die Steuereinrichtung selbst kann dabei zum Beispiel Bestandteil einer separaten Steuereinrichtung sein oder aber auch Bestandteil einer anderen fahrzeugseitigen Steuereinheit sein, zum Beispiel Bestandteil eines Motorsteuergeräts sein, um nur ein Beispiel zu nennen. Grundsätzlich besteht aber auch die Möglichkeit, die Absperreinrichtung so auszulegen, dass diese nur zwischen den beiden genannten Stellungen, nämlich der Offenstellung einerseits und der Schließstellung andererseits verstellbar ist.

Gemäß einer bauteiltechnisch besonders einfachen und funktionssicheren Ausgestaltung wird weiter vorgeschlagen, dass die Absperreinrichtung jeweils durch ein mittels einer Steuereinrichtung öffenbares Rückschlagventil gebildet ist, das in der Schließstellung den Durchfluss in Richtung der Ausgleichsvolumeneinrichtung sperrt und in Richtung der jeweils zugeordneten Kammer freigibt. Bei dem Rückschlagventil kann es sich zum Beispiel um ein federbelastetes Rückschlagventil handeln, wobei jedoch auch andere Rückschlagventile zum Einsatz gelangen können. Ein derartiges Rückschlagventil ist bevorzugt so ausgebildet, dass es in der Schließstellung den Durchfluss in Richtung der jeweils zugeordneten Kammer erst in Abhängigkeit von dem Erreichen eines definierten Schwellwertes, bevorzugt einer definierten Druckdifferenz zwischen der Ausgleichsvolumeneinrichtung und zugeordneter Kammer, höchst bevorzugt erst nach Überschreiten eines Unterdruckschwellwertes in der auf Zug belasteten Kammer, freigibt. Ein derartiger Aufbau zeichnet sich, wie bereits zuvor erwähnt, durch einen bauteiltechnisch einfachen Aufbau aus und weist eine sehr hohe Funktionssicherheit auf, wobei der Steuerungsaufwand für ein derartiges Rückschlagventil zudem relativ gering ist.

Gemäß einer weiteren besonders bevorzugten Ausgestaltung wird vorgeschlagen, dass die Ausgleichsvolumeneinrichtung ein Gehäuse aufweist, in dem ein Gasvolumen aufgenommen ist, das von den darin aufnehmbaren oder aufgenommenen Flüssigkeitsvolumen mittels eines Trennelementes dergestalt abgetrennt ist, dass das Gasvolumen bei einströmender Flüssigkeit komprimierbar ist. Das Trennelement kann hierbei insbesondere durch eine flexible und/oder elastische Membran, die in dem Gehäuse festgelegt ist, gebildet sein. Mit einer derartig ausgebildeten Ausgleichsvolumeneinrichtung lässt sich somit eine besonders komfortable und einfache Veränderung der Lagersteifigkeit erzielen, die sich durch eine weiche Federkennlinie mit einem großen Federweg auszeichnet, da durch das zusätzliche Gasvolumen eine Gasfeder zur Verfügung gestellt wird, die dies ermöglicht. Zudem wird mit einem derartigen Aufbau sichergestellt, dass die bei Hydrolagern auftretende dynamische Verhärtung zu höheren Frequenzen hin in einen nicht störenden Bereich verschoben wird, weil die Strömungswiderstände zu diesen Ausgleichsvolumeneinrichtungen besonders strömungswiderstandsarm sind bzw. besonders strömungswiderstandsarm ausgelegt sein können. Insgesamt ist es hierbei von Vorteil, wenn die Ausgleichsvolumeneinrichtung gemäß einer besonders bevorzugten konkreten Ausgestaltung so aufgebaut ist, dass in dem Gehäuse der Ausgleichsvolumeneinrichtung, bezogen auf den Herstell- und/oder Ausgangszustand, ein definiertes Gasvolumen mit einem definierten Gasdruck zusammen mit einer definierten Flüssigkeitsmenge aufgenommen ist. Der Gasdruck kann entsprechend der Funktionsanforderung eingestellt werden, um ein gewünschtes Gaspolster bzw. eine gewünschte Gasfeder zur Verfügung zu stellen.

Die Anbindung der Ausgleichsvolumeneinrichtung an die jeweils zugeordnete Kammer kann auf unterschiedliche Weise erfolgen. Besonders bevorzugt ist vorgesehen, dass von der Ausgleichsvolumeneinrichtung eine Schlauch- und/oder Rohrleitung wegführt, die mit einem von der zugeordneten Kammer wegführenden Verbindungskanal strömungsverbunden ist. Die Schlauch- und/oder Rohrleitung kann dabei sowohl starr als auch flexibel oder aber auch teilweise starr und teilweise flexibel ausgebildet sein. Der Verbindungskanal kann wiederum in dem Elastomerkörper verlaufen bzw. dort integral ausgebildet sein. Ebenso sollte der Verbindungskanal bevorzugt so angeordnet sein bzw. so ausgebildet sein, dass dieser bei einer Druck- oder Unterdruckbeaufschlagung formstabil bleibt, damit die Querschnittsfläche nicht verändert wird, so dass die Strömungsverbindung zur Ausgleichsvolumeneinrichtung funktionsfähig bleibt. Im Hinblick auf eine baulich besonders einfache Realisierung wird zudem vorgeschlagen, dass die Absperreinrichtung in die Schlauch- und/oder Rohrleitung integriert ist, die regelmäßig außerhalb des Elastomerkörpers bzw. des Lageraufbaus verlaufen.

Gemäß einer weiteren besonders bevorzugten Ausgestaltung der vorliegenden Erfindungsidee wird vorgeschlagen, dass das Lager ein verschachteltes Lager ist, bei dem das erste Lagerteil ein Lageraußenteil ausbildet, in dem das zweite Lagerteil als Lagerinnenteil unter Zwischenschaltung wenigstens eines Elastomerkörpers aufgenommen ist. Dadurch ergibt sich ein insgesamt kompakter Lageraufbau. Ebenso ist ein Lageraufbau vorteilhaft, bei dem die Kammern jeweils insgesamt in dem Elastomerkörper ausgebildet bzw. aufgenommen sind, wenngleich auch Lagerausgestaltungen, bei denen die Kammern lediglich bereichsweise vom Elastomerkörper begrenzt sind, grundsätzlich denkbar und möglich sind. Weiter ist insbesondere ein konkreter Aufbau vorteilhaft, insbesondere im Hinblick auf hydraulisch dämpfende Fahrwerklager, bei der zwei mit Flüssigkeit gefüllte Kammern vorgesehen sind, die im Querschnitt gesehen, im Wesentlichen auf gegenüberliegenden Seiten des Lagerinnenteils angeordnet sind. Ein derartiger Lageraufbau ist für eine Vielzahl von konkreten Lageranwendungen vorteilhaft.

In Verbindung mit den über die Überströmeinrichtung strömungstechnisch verbundenen Kammern ist es besonders vorteilhaft, wenn die Kammern strömungstechnisch entkoppelt bzw. unabhängig von deren jeweiliger Strömungsverbindung mit der jeweils zugeordneten Ausgleichsvolumeneinrichtung, wie dies bereits zuvor dargestellt worden ist, mit wenigstens einem die Überströmeinrichtung zwischen den Kammern ausbildenden Strömungskanal strömungstechnisch verbunden sind. Dieser Strömungskanal kann grundsätzlich vollständig im Elastomerkörper verlaufen. Alternativ dazu ist es aber auch möglich, dass der Strömungskanal lediglich zum Teil im Elastomerkörper verläuft. In diesem Fall ist dann gemäß einer bevorzugten Ausgestaltung vorgesehen, dass von den Kammern jeweils ein Kanalabschnitt, vorzugsweise ein in dem Elastomerkörper verlaufender oder dort integral ausgebildeter sowie bei einer Unter-/Überdruckbeaufschlagung des Elastomerkörpers ausreichend formstabilen Kanalabschnitt, des Strömungskanals wegführt. Die Kanalabschnitte münden bevorzugt in einen vorteilhafter Weise außerhalb des Elastomerkörpers verlaufenden Verbindungsabschnitt des Strömungskanals. Zudem kann in diesem Zusammenhang vorgesehen sein, dass in den Verbindungsabschnitt die Ventileinrichtung zur Absperrung oder Regelung des Durchflusses für den Strömungskanal integriert ist. Ein derartiger konkreter Aufbau erlaubt eine gute funktionsmäßige Trennung zwischen der Einstellung der Dämpfungscharakteristik und der Einstellung der Lagersteifigkeit und ist zudem auf bauteiltechnisch einfache und funktionssichere Weise herstellbar.

Die Ventileinrichtung zur Absperrung oder Regelung des Durchflusses durch die Überströmeinrichtung kann grundsätzlich auf unterschiedlichste Art und Weise ausgebildet werden. Besonders bevorzugt ist ein Aufbau, bei dem diese durch ein Drosselventil, bevorzugt durch ein elektrisch ansteuerbares Drosselventil, gebildet ist, mittels dem der Strömungsquerschnitt und damit der Durchfluss durch die Überströmeinrichtung in Abhängigkeit von mittels einer Steuereinrichtung vorgebbarer Dämpfungsparamater eingestellt bzw. verändert werden kann. Eine derartige Drosselventileinrichtung bzw. -anordnung kann auf einfache und funktionssichere Weise in den Lageraufbau integriert werden und ermöglicht durch einfache Ansteuerung die Einstellung der jeweils, bezogen auf die jeweilige Fahrsituation, vorgegebenen Dämpfungscharakteristik. Die jeweiligen Dämpfungsmaxima, bezogen auf die jeweilige Fahrsituation bzw. Betriebssituation, können dabei zum Beispiel wiederum in einem Kennfeld der Steuereinrichtung abgelegt sein, die ebenfalls wiederum als separate Steuereinrichtung ausgelegt sein kann oder aber auch Bestandteil einer anderen fahrzeugseitig vorhandenen Steuereinrichtung sein kann, zum Beispiel Bestandteil eines Motorsteuergerätes sein kann.

Die erfindungsgemäße Aufgabe wird ferner durch ein Verfahren zur Veränderung der Position eines Lagers, insbesondere eines Fahrwerklagers, in einem Fahrzeug, insbesondere in einem Kraftfahrzeug, gelöst, bei der zur Veränderung der Position (Wegverstellung) des Lagers die mit der Überströmeinrichtung gekoppelte Ventileinrichtung und damit die Strömungsverbindung zwischen den Kammern abgesperrt wird. Weiter wird eine einer ersten Kammer zugeordnete Absperreinrichtung in die Offenstellung und eine einer zweiten Kammer zugeordnete Absperreinrichtung in die Schließstellung überführt, so dass bei einer Relativverlagerung des ersten Lagerteils gegenüber dem zweiten Lagerteil und einer dadurch bedingten Druckbeanspruchung der ersten Kammer Flüssigkeit aus der ersten Kammer in die Ausgleichsvolumeneinrichtung einströmt, während gleichzeitig die auf Zug beanspruchte Kammer Flüssigkeit aus der der zweiten Kammer zugeordneten Ausgleichsvolumeneinrichtung nachsaugt. Dadurch wird erreicht, dass das Lager in Richtung der ersten Kammer verlagert wird. Ein Rückströmen bzw. Rückschwingen wird dabei durch das Schließen der nicht aktiv geöffneten Absperreinrichtung verhindert, wodurch sichergestellt ist, dass sich das Lager auf diese Weise durch mehrere Schwingvorgänge in die gewünschte Richtung "pumpt", wobei es sich selbstständig versteift, bis sich ein Gleichgewicht ergibt.

Eine derartige erfindungsgemäße Positionsveränderung bzw. Wegverstellung kann somit auf energiesparende und bauteilsparende Weise erzielt werden, da auf elektrische Aktoren und eine hydraulische Druckerzeugung verzichtet werden kann, was zudem eine wesentliche Platz- und Gewichtsersparnis mit sich bringt. Das zeigt, dass abgesehen vom Steuerstrom der Absperreinrichtungen und der Ventileinrichtung Absperrung oder Regelung des Durchflusses durch die Überströmeinrichtung keine zusätzliche Energie verbraucht wird.

Die Erfindung wird nachfolgend anhand einer Zeichnung näher erläutert.

Es zeigen:
- Fig. 1: schematisch eine Schnittansicht durch eine beispielhafte Ausführungsform eines erfindungsgemäßen Lagers in einer Grund- und Ausgangsstellung, und
- Fig. 2a, b: das Lager gemäß Fig. 1 in unterschiedlich eingefederten Zuständen.

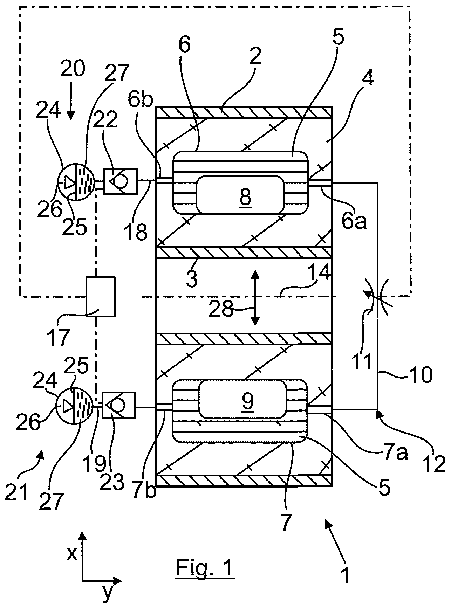

In der Fig. 1 ist schematisch und beispielhaft ein Querschnitt durch eine beispielhafte Ausführungsform einer erfindungsgemäßen Lagerausgestaltung gezeigt. Konkret ist ein hydraulisch dämpfendes Lager 1 gezeigt, das ein Lageraußenteil 2 aufweist, das zum Beispiel eine Zylinderhülsenform aufweist. Das Lager 1 umfasst ferner ein im inneren des Lageraußenteils 2 aufgenommenes, hier beispielhaft ebenfalls zylinderhülsenartig ausgebildetes Lagerinnenteil 3, das mit dem Lageraußenteil 2 mittels eines Elastomerkörpers 4 verbunden ist. Der Elastomerkörper 4 kann dabei zum Beispiel sowohl am Lagerinnenteil 3 als auch am Lageraußenteil 2 anvulkanisiert sein. Alternativ dazu kann der Elastomerkörper 4 aber auch lediglich an einem der beiden Bauteile (Lageraußenteil 2, Lagerinnenteil 3) anvulkanisiert sein, zum Beispiel am Lagerinnenteil 3 und dann zur Ausbildung einer Vorspannung im Elastomerkörper 4 in das Lageraußenteil eingepresst sein.

Wie der in der Fig. 1 gezeigte Querschnitt zeigt, kann das Lager 1 im Elastomerkörper 4 in der hier beispielhaft gewählten Fahrzeuglängsachsenrichtung x zwei einander mit Bezug zum Lagerinnenteil 3 gegenüberliegende und mit einer Hydraulikflüssigkeit 5 befüllte Kammern 6, 7 aufweisen.

In den Kammern 6, 7 ist hier ferner noch jeweils ein aus einem gleichen oder anderen Elastomermaterial hergestellter Elastomeranschlag 8, 9 ausgebildet, der zur Wegbegrenzung dient.

Der Elastomerkörper 4 ist hier beispielhaft umlaufend um das Lagerinnenteil 3 ausgebildet, könnte jedoch auch durch zwei voneinander beabstandete Elastomerblöcke gebildet sein. Ebenso können in dem Elastomerkörper 4 selbstverständlich noch weitere Kammern, Ausnehmungen oder dergleichen ausgebildet, was hier aber aus Übersichtlichkeitsgründen nicht dargestellt ist.

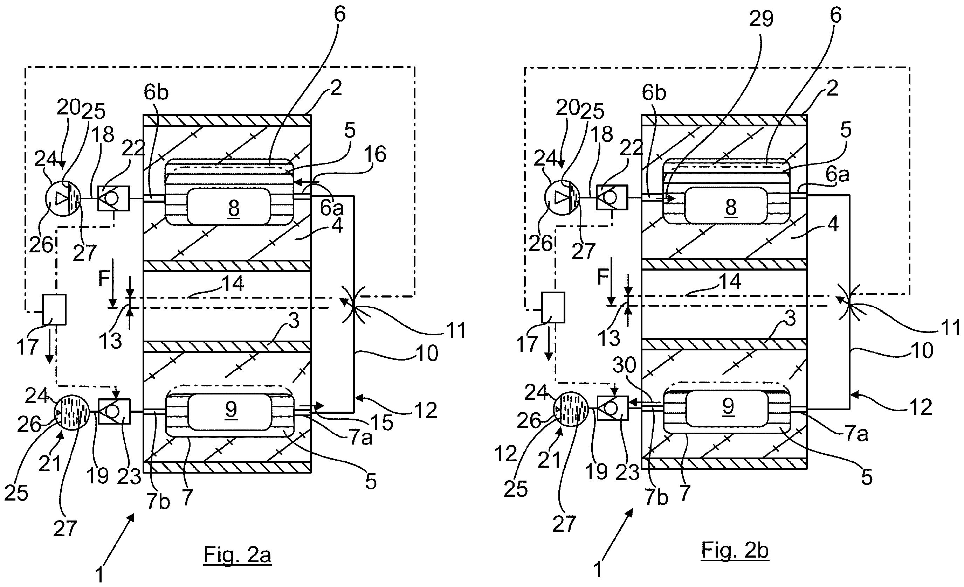

Von jeder der Kammern 6, 7 führt jeweils ein in dem Elastomerkörper 4 verlaufender bzw. dort integral ausgebildeter Kanalabschnitt 6a, 7a weg, wobei die Kanalabschnitte 6a, 7a in einen hier beispielhaft außerhalb des Elastomerkörpers 4 verlaufenden Verbindungsabschnitt 10 (zum Beispiel eine Rohrleitung, ein Kanal oder dergleichen) einmünden, in dem ein elektrisch ansteuerbares Drosselventil 11 angeordnet ist, mittels dem der Strömungsquerschnitt und damit der Durchfluss durch den Verbindungsabschnitt 10 in Abhängigkeit von mittels einer Steuereinrichtung 17 vorgebbarer Dämpfungsparameter eingestellt bzw. verändert werden kann. Die beiden Kanalabschnitte 6a, 7a bilden somit zusammen mit dem Verbindungsabschnitt 10 einen Strömungskanal 12 aus, über den bei geöffnetem Drosselventil 11 Hydraulikflüssigkeit von der einen Kammer in die andere Kammer überströmen kann, wie dies in der Fig. 2a gezeigt ist. Kommt es nämlich zu einer entsprechenden, hier durch die Kraft F dargestellten Kraftbeaufschlagung des Lagers 1 und damit zum Beispiel zu einer Relativverlagerung des Lagerinnenteils 3 relativ zum Lageraußenteil 2, hier beispielhaft dargestellt durch den Versatz 13 der Mittellinie 14, so wird die untere Kammer 7 auf Druck belastet, wodurch die in der Kammer 7 aufgenommene Hydraulikflüssigkeit über den Kanalabschnitt 7a in den Verbindungsabschnitt 10 des Strömungskanals 12 überströmt (Pfeil 15 in Fig. 2a), von wo aus die Flüssigkeit dann entsprechend des Pfeils 16 der Fig. 2a über den Kanalabschnitt 6a in die entsprechend auf Zug beanspruchte und damit einer Volumenvergrößerung unterliegende Kammer 6 einströmt.

In der Fig. 2a ist das gegenüber dem Ausgangszustand (Fig. 1) veränderte Kammervolumen der Kammern 6, 7 strichpunktiert eingezeichnet, wobei die strichpunktierte Linie die Ausgangslage symbolisiert.

Die Dämpfungscharakteristik bzw. das Dämpfungsmaximum kann hierbei durch entsprechende Wahl des Strömungsquerschnitts des Drosselventils 11 eingestellt bzw. verändert bzw. vorgegeben werden, was bevorzugt mittels der Steuereinrichtung 17 erfolgt.

Mittels eines derartig variabel einstellbaren Drosselventils 11 kann die Dämpfungscharakteristik gezielt auf die Erfordernisse im Fahrbetrieb angepasst werden.

Wie dies in Fig. 1 weiter ersichtlich ist, führt (hier lediglich beispielhaft zur Betonung der Unabhängigkeit) ein vom Strömungskanal 12 auf der in Fahrzeugquerrichtung y gegenüberliegenden Seite der Kanalabschnitte 6a, 7a liegender Verbindungskanal 6b, 7b von jeder der Kammern 6, 7 weg. Auch hier sind die Verbindungskanäle 6b, 7b so ausgebildet, dass sie in dem Elastomerkörper 4 verlaufen bzw. sind dort integral ausgebildet. Die beiden Verbindungskanäle 6b, 7b sind jeweils mittels einer Schlauch- und/oder Rohrleitung 18, 19 mit einer Ausgleichsvolumeneinrichtung 20, 21 strömungsverbunden, wobei hier beispielhaft in jede der Schlauch- und/oder Rohrleitungen 18, 19 ein bevorzugt federbelastetes Rückschlagventil 22, 23 integriert ist, das als elektrisch ansteuerbares Rückschlagventil 22, 23 hier beispielhaft ebenfalls mit der Steuereinrichtung 17 signaltechnisch bzw. elektrisch verbunden ist.

Sowohl die Verbindungskanäle 6b, 7b als auch die Kanalabschnitte 6a, 7a sind hier vorzugsweise so angeordnet bzw. ausgebildet, dass diese bei einer entsprechenden Druckbeaufschlagung nicht bzw. nicht so komprimiert werden, dass keine Flüssigkeitsströmung mehr möglich ist.

Die Ausgleichsvolumeneinrichtung 20 umfasst jeweils ein Gehäuse 24, in dem, getrennt durch eine flexible und elastische Membran 25 zum einen ein Gasvolumen 26 mit einem definierten Gasdruck und zum anderen ein Flüssigkeitsvolumen 27 aufgenommen ist. Bei der im Gehäuse 24 der Ausgleichsvolumeneinrichtung 20 bzw. 21 aufgenommenen Flüssigkeit handelt es sich bevorzugt um die gleiche Hydraulikflüssigkeit 5, wie sie in den Kammern 6, 7 aufgenommen ist.

Mittels der Ausgleichsvolumeneinrichtungen 20, 21 kann auf einfache Weise die Lagersteifigkeit des Lagers 1 eingestellt werden, in dem durch Überführen des Rückschlagventils 22 und/oder 23 in dessen Offenstellung (durch entsprechende Ansteuerung über die Steuereinrichtung 17) sichergestellt wird, dass Hydraulikflüssigkeit 5 aus der Kammer 6 und/oder 7 in die Ausgleichsvolumeneinrichtung 20 und/oder 21 einströmen kann.

Durch die über die flexible bzw. elastische Membran 25 hierdurch bewirkte Komprimierung des Gasvolumens in der Ausgleichsvolumeneinrichtung 20 und/oder 21 wird dabei eine weiche Federkennlinie eingestellt und damit das Lager 1 insgesamt weicher.

Wie vorstehend durch die und/oder-Formulierung zum Ausdruck gebracht, besteht dabei die Möglichkeit, die Rückschlagventile 22, 23 und damit die Reihenschaltung der Kammer 6 bzw. 7 mit dem Flüssigkeitsvolumen 27 der Ausgleichsvolumeneinrichtungen 20 bzw. 21 einzeln für jede der Kammern, zeitversetzt oder aber auch gleichzeitig zu realisieren. Dies hängt von den jeweiligen Fahrsituationen bzw. den jeweils konkret einzustellenden und vorgegebenen Federeigenschaften ab.

Kommt es zum Beispiel zu einer Lagerbeaufschlagung im Sinne der Kraft F der Fig. 2a, wird die untere Kammer 7 druckbeansprucht, wodurch Flüssigkeit 5 aus der Kammer 7 über den Verbindungskanal 7b und die Schlauch- und/oder Rohrleitung 19 bei geöffnetem Rückschlagventil 23 in die Ausgleichsvolumeneinrichtung 21 einströmen kann.

Gleichzeitig kann über das Rückschlagventil 22 und einer entsprechend auf Zug beanspruchten Kammer 6 über den Verbindungskanal 6b und die Schlauch- und/oder Rohrleitung 18 Flüssigkeit aus der Ausgleichsvolumeneinrichtung 20 abgesaugt und in die Kammer 6 einströmen, so dass dort kein kavitätsfördernder Unterdruck entstehen kann.

Bei einer entsprechend des Doppelpfeils 28 in Fig. 1 stattfindenden Kraftbeaufschlagung des Lagers 1 in die andere Richtung, das heißt in die der Kraft F entgegengesetzte Richtung, kann dann der Flüssigkeitsstrom zwischen den Ausgleichsvolumeneinrichtungen 20 und 21 und den jeweils zugeordneten Kammern 6, 7 in umgekehrter Reihenfolge erfolgen. Das Gleiche gilt selbstverständlich auch für die Überströmung der Flüssigkeit zwischen den Kammern 6, 7 mittels des Strömungskanals 12, wobei hierzu zu bemerken ist, dass in Abhängigkeit vom Durchströmquerschnitts des Drosselventils 11 die Überströmung der Flüssigkeit von der einen in die andere Kammer über den Strömungskanal 12 bedingt durch die Trägheit der Flüssigkeit weniger schnell von Statten geht als die Flüssigkeitsströmung zwischen den Ausgleichsvolumeneinrichtungen 20 und/oder 21 und den jeweils zugeordneten Kammern 6 und 7.

Die oben gemachten Ausführungen in Verbindung mit der Fig. 1 und der Fig. 2a zeigen deutlich, dass mit der erfindungsgemäßen Lagerausgestaltung neben einem Kavitationsschutz und einer einfachen Einstellung der Lagersteifigkeit auch eine gezielte Schwingungsdämpfung ermöglicht wird.

Abgesehen von den eben genannten Vorteilen lässt sich mit dem erfindungsgemäßen Lageraufbau ferner aber auch eine besonders einfache Veränderung der Position des Lagers 1 in einem Fahrzeug, zum Beispiel in einem Fahrwerk eines Kraftfahrzeugs, erzielen, was nachfolgend anhand der Fig. 2b näher erläutert wird.

Zur Veränderung der Position (Wegverstellung) des Lagers 1 wird zuerst das Drosselventil 11 geschlossen und damit die Strömungsverbindung zwischen den Kammern 6, 7 über den Strömungskanal 12 abgesperrt. Weiter wird das der Kammer 7 zugeordnete Rückschlagventil 23 in die Offenstellung und das der Kammer 6 zugeordnete Rückschlagventil 22 in die Schließstellung überführt, so dass bei einer Relativverlagerung des Lagerinnenteils 3 gegenüber dem Lageraußenteil 2 und einer dadurch bedingten Druckbeanspruchung der Kammer 7 Hydraulikflüssigkeit aus der Kammer 7 in die Ausgleichsvolumeneinrichtung 21 einströmt, während gleichzeitig die auf Zug beanspruchte Kammer 6 Hydraulikflüssigkeit aus der der Kammer 6 zugeordneten Ausgleichsvolumeneinrichtung 20 nachsaugt und somit das Lager 1 in Richtung der Kammer 7 verlagert wird. Die entsprechenden Strömungsvorgänge sind durch die Pfeile 29 und 30 in der Fig. 2b schematisch gezeigt.

Dadurch, dass die Rückschlagventile 22, 23 so ausgelegt sind, dass diese in deren Schließzustand lediglich ein Überströmen von der jeweiligen Ausgleichsvolumeneinrichtung 20 bzw. 21 in Richtung Kammer 6 bzw. 7 ermöglichen, nicht dagegen ein Rückströmen bzw. Überströmen von Hydraulikflüssigkeit 5 aus der Kammer 6 bzw. 7 in die Ausgleichsvolumeneinrichtung 20 bzw. 21, ist im in der Fig. 2b gezeigten Beispielfall sichergestellt, dass auch bei einer Entlastung des Lagers 1 von der Kraft F und einer dadurch bedingten (hier nicht dargestellten) Zugentlastung der Kammer 6 keine Flüssigkeit von der Kammer 6 in die Ausgleichsvolumeneinrichtung 20 zurückströmen kann. Andererseits kann in diesem Fall bei einer Volumenvergrößerung bzw. einer Ausdehnung der Kammer 7 Flüssigkeit von der Ausgleichsvolumeneinrichtung 21 in die Kammer 7 eingesaugt werden, da sich das dortige Rückschlagventil 23 in der Offenstellung befindet, in der die Strömungsverbindung in beiden Richtungen freigegeben ist.

Durch mehrere derartige Schwingvorgänge pumpt sich somit das Lager 1 bei einer derartigen Schaltstellung des Drosselventils 11 bzw. der Rückschlagventile 22, 23 immer weiter in die gewünschte Richtung, wobei es sich weiterhin selbstständige versteift, bis sich ein Gleichgewicht einstellt. Sobald das Lager 1 die gewünschte Position erreicht hat, kann die Schaltstellung der Ventile wieder geändert werden und die gewünschte Dämpfungscharakteristik bzw. die gewünschte Lagersteifigkeit in der zuvor beschriebenen Weise eingestellt werden.

## Patentansprüche

1. Hydraulisch dämpfendes Lager für ein Fahrwerk eines Fahrzeugs, insbesondere eines Kraftfahrzeugs, mit einem ersten Lagerteil, das mit einem ersten Bauteil verbunden ist, und mit einem zweiten Lagerteil, das mit einem zweiten Bauteil verbunden ist, wobei zwischen dem ersten Lagerteil und dem zweiten Lagerteil wenigstens ein Elastomerkörper angeordnet ist, der wenigstens zwei miteinander strömungstechnisch mittels einer Überströmeinrichtung verbundene sowie mit einer Flüssigkeit befüllte Kammern dergestalt wenigstens teilweise begrenzt, dass bei einer Relativbewegung zwischen dem ersten und dem zweiten Lagerteil und einer dadurch bedingten Druckbelastung und/oder Komprimierung wenigstens einer Kammer die Flüssigkeit aus dieser wenigstens einen Kammer über die wenigstens eine Überströmeinrichtung in die wenigstens eine andere, vorzugsweise auf Zug belastete Kammer überströmt, wobei die Überströmeinrichtung (12) zur Einstellung der Dämpfungscharakteristik des Lagers mit einer Ventileinrichtung (11) zur Absperrung oder Regelung des Durchflusses durch die Überströmeinrichtung (12) gekoppelt ist, **dadurch gekennzeichnet, dass** jede der Kammern (6, 7), mit einer, mittels einer Absperreinrichtung (22, 23) absperrbaren Ausgleichsvolumeneinrichtung (20, 21) gekoppelt ist, die zur Einstellung der Lagersteifigkeit mit dem jeweils zugeordneten Kammervolumen strömungstechnisch verbindbar ist.

2. Lager nach Anspruch 1, **dadurch gekennzeichnet,**
**dass** die jeder Ausgleichsvolumeneinrichtung (20, 21) zugeordnete Absperreinrichtung (22, 23) mit einer Steuereinrichtung (17), vorzugsweise einer elektrischen Steuereinrichtung, gekoppelt ist, mittels der die Absperreinrichtung (22, 23) in Abhängigkeit von definierten Lagerzuständen so ansteuerbar ist, dass
a) in einer Offenstellung der Absperreinrichtung (22, 23) die Strömungsverbindung zwischen der Ausgleichsvolumeneinrichtung (20, 21) und der jeweils zugeordneten Kammer (6, 7) in beide Strömungsrichtungen freigegeben ist,
oder
b) in einer Schließstellung der Absperreinrichtung (22, 23) die Strömungsverbindung zwischen der Ausgleichsvolumeneinrichtung (20, 21) und der jeweils zugeordneten Kammer (6, 7) in eine Strömungsrichtung dergestalt gesperrt ist, dass lediglich Flüssigkeit aus der Ausgleichsvolumeneinrichtung (20, 21) in die jeweils zugeordnete Kammer (6, 7) einströmen kann.

3. Lager nach Anspruch 1 oder 2, **dadurch gekennzeichnet, dass** die Absperreinrichtung (22, 23) jeweils durch ein mittels einer Steuereinrichtung öffenbares Rückschlagventil gebildet ist, das in der Schließstellung den Durchfluss in Richtung der Ausgleichsvolumeneinrichtung (20, 21) sperrt und in Richtung der jeweils zugeordneten Kammer (6, 7) freigibt.

4. Lager nach Anspruch 3, **dadurch gekennzeichnet, dass** das Rückschlagventil (22, 23), vorzugsweise ein federbelastetes Rückschlagventil, so ausgebildet ist, dass es in der Schließstellung den Durchfluss in Richtung der jeweils zugeordneten Kammer (6, 7) erst in Abhängigkeit von dem Erreichen eines definierten Schwellwertes, bevorzugt einer definierten Druckdifferenz zwischen Ausgleichsvolumeneinrichtung (20, 21) und zugeordneter Kammer (6, 7), höchst bevorzugt erst nach Überschreiten eines Unterdruckschwellwertes in der auf Zug belasteten Kammer (6, 7), freigibt.

5. Lager nach einem der vorhergehenden Ansprüche, **dadurch gekennzeichnet, dass** die Ausgleichsvolumeneinrichtung (20, 21) ein Gehäuse (24) aufweist, in dem ein Gasvolumen (26) aufgenommen ist, das von dem darin aufnehmbaren oder aufgenommenen Flüssigkeitsvolumen (27) mittels eines Trennelementes, insbesondere mittels einer flexiblen und/oder elastischen Membran (25), dergestalt abgetrennt ist, dass das Gasvolumen bei einströmender Flüssigkeit komprimierbar ist.

6. Lager nach Anspruch 5, **dadurch gekennzeichnet, dass** in dem Gehäuse der Ausgleichsvolumeneinrichtung (20, 21), bezogen auf den Herstell- und/oder Ausgangszustand, ein definiertes Gasvolumen (26) mit einem definierten Gasdruck zusammen mit einer definierten Flüssigkeitsmenge aufgenommen ist.

7. Lager nach einem der vorhergehenden Ansprüche, **dadurch gekennzeichnet, dass** von der Ausgleichsvolumeneinrichtung (20, 21) eine Schlauch- und/oder Rohrleitung (18, 19) wegführt, die mit einem von der zugeordneten Kammer (6, 7) wegführenden Verbindungskanal (6b, 7b), vorzugsweise einem in dem Elastomerkörper (4) verlaufenden oder dort integral ausgebildeten sowie bei einer Druckbeaufschlagung des Elastomerkörpers (4) nicht komprimierbaren Verbindungskanal (6b, 7b), strömungsverbunden ist.

8. Lager nach Anspruch 6, **dadurch gekennzeichnet, dass** die Absperreinrichtung (22, 23) in die Schlauch- und/oder Rohrleitung (18, 19) integriert ist.

9. Lager nach einem der vorhergehenden Ansprüche, **dadurch gekennzeichnet, dass** das erste Lagerteil (2) ein Lageraußenteil ausbildet, in dem das zweite Lagerteil (3) als Lagerinnenteil unter Zwischenschaltung wenigstens eines Elastomerkörpers (4) aufgenommen ist.

10. Lager nach Anspruch 9, **dadurch gekennzeichnet, dass** zwei mit Flüssigkeit gefüllte Kammern (6, 7) vorgesehen sind, die im Querschnitt gesehen, im Wesentlichen auf gegenüberliegenden Seiten des Lagerinnenteils angeordnet sind.

11. Lager nach einem der vorhergehenden Ansprüche, **dadurch gekennzeichnet, dass** die Kammern (6, 7) strömungstechnisch entkoppelt und/oder unabhängig von deren, jeweiliger Strömungsverbindung mit der jeweils zugeordneten Ausgleichsvolumeneinrichtung (20, 21) mit wenigstens einem die Überströmeinrichtung (12) zwischen den Kammern (6, 7) ausbildenden Strömungskanal strömungstechnisch verbunden sind.

12. Lager nach Anspruch 11, **dadurch gekennzeichnet, dass** der wenigstens eine Strömungskanal (12) wenigstens zum Teil im Elastomerkörper (4) verläuft.

13. Lager nach Anspruch 12, **dadurch gekennzeichnet, dass** von den Kammern (6, 7) jeweils ein Kanalabschnitt (6a, 7a), vorzugsweise ein in dem Elastomerkörper (4) verlaufender oder dort integral ausgebildeter sowie bei einer Druckbeaufschlagung des Elastomerkörpers (4) nicht komprimierbarer Kanalabschnitt (6a, 7a) des Strömungskanals (12) wegführt, wobei die Kanalabschnitte (6a, 7a) in einen bevorzugt außerhalb des Elastomerkörpers (4) verlaufenden Verbindungsabschnitt (10) des Strömungskanals (12) münden, wobei bevorzugt vorgesehen ist, dass in den Verbindungsabschnitt (10) die Ventileinrichtung (11) zur Absperrung oder Regelung des Durchflusses durch den Strömungskanal (12) integriert ist.

14. Lager nach einem der vorhergehenden Ansprüche, **dadurch gekennzeichnet, dass** die Ventileinrichtung (11) zur Absperrung oder Regelung des Durchflusses durch die Überströmeinrichtung (12) durch ein Drosselventil, bevorzugt ein elektrisch ansteuerbares Drosselventil, gebildet ist, mittels dem der Strömungsquerschnitt und damit der Durchfluss durch die Überströmeinrichtung (12) in Abhängigkeit von mittels einer Steuereinrichtung (17) vorgebbarer Dämpfungsparameter einstellbar und/oder veränderbar ist.

15. Verfahren zur Veränderung der Position eines Lagers, insbesondere eines Fahrwerklagers, in einem Fahrzeug, insbesondere in einem Kraftfahrzeug, mit einem hydraulisch dämpfenden Lager nach einem der vorhergehenden Ansprüche,
**dadurch gekennzeichnet,**
**dass** zur Veränderung der Position (Wegverstellung) des Lagers (1) die mit der Überströmeinrichtung (12) gekoppelte Ventileinrichtung (11) und damit die Strömungsverbindung zwischen den Kammern (6, 7) abgesperrt wird,
**dass** weiter eine einer ersten Kammer (7) zugeordnete Absperreinrichtung (23) in die Offenstellung und eine einer zweiten Kammer (6) zugeordnete Absperreinrichtung (22) in die Schließstellung überführt wird, so dass bei einer Relativverlagerung des ersten Lagerteils (3) gegenüber dem zweiten Lagerteil (4) und einer dadurch bedingten Druckbeanspruchung der ersten Kammer (7) Flüssigkeit aus der ersten Kammer (7) in die Ausgleichsvolumeneinrichtung (21) einströmt, während gleichzeitig die auf Zug beanspruchte zweite Kammer (6) Flüssigkeit aus der der zweiten Kammer (6) zugeordneten Ausgleichsvolumeneinrichtung (20) nachsaugt und das Lager (1) in Richtung der ersten Kammer (7) verlagert wird.

## Claims

1. Hydraulically damped bearing for a suspension of a vehicle, in particular a motor vehicle, with a first bearing part which is connected to a first component, and with a second bearing part which is connected to a second component, wherein at least one elastomer body is arranged between the first bearing part and the second bearing part which at least partially limits the at least two chambers which are fluidically connected to one another by means of an outflow device and filled with a liquid such that in the case of a relative movement between the first and the second bearing part and a consequent pressure load and/or compression of at least one chamber the liquid flows from this at least one chamber via the at least one outflow device into the at least one other chamber, which is preferably loaded with tension, **characterised in that** the outflow device (12) for adjusting the damping characteristic of the bearing is coupled to a valve unit (11) for shutting off or regulating the flow through the outflow device (12) and **in that** at least one of the chambers (6, 7), preferably each of the chambers, is coupled to a compensating volume device (20, 21) which can be shut off by means of a shut-off device (22, 23) which can be fluidically connected to the respective associated chamber volume for adjusting the bearing stiffness.

2. Bearing according to claim 1, **characterised in that**
the shut-off device (22, 23) associated with each compensating volume device (20, 21) is coupled to a control unit (17), preferably an electrical control unit by means of which the shut-off device (22, 23) can be controlled depending on the bearing states, **in that**
a) in an open position of the shut-off device (22, 23) the flow connection between the compensating volume device (20, 21) and each of the chambers (6, 7) associated therewith is open in both flow directions,
or
b) in a closed position of the shut-off device (22, 23) the flow connection between the compensating volume device (20, 21) and each of the chambers (6, 7) connected therewith is closed such that only liquid from the compensating volume device (20, 21) can flow into each of the respective associated chambers (6, 7).

3. Bearing according to claim 1 or 2, **characterised in that** the shut-off device (22, 23) is formed by a check valve which can be opened by means of a control unit which closes in the closed position of the flow in the direction of the compensating volume device (20, 21) and which opens in the direction of the respective associated chamber (6, 7).

4. Bearing according to claim 3, **characterised in that** the check valve (22, 23), preferably a spring-loaded check valve, is formed such that in the closed position it only releases the flow in the direction of the respective associated chambers (6, 7) depending on a defined threshold value having been reached, preferably a defined differential pressure between the compensating volume device (20, 21) and the respective associated chambers (6, 7), most preferably only after a negative pressure threshold value has been exceeded in the chamber (6, 7) loaded with pressure.

5. Bearing according to any one of the preceding claims, **characterised in that** the compensating volume device (20, 21) comprises a housing (24) in which a gas volume (26) is received which is separated from the liquid volume (27) which can be received or absorbed therein by means of a separating element, in particular by means of a flexible and/or elastic membrane (25) such that the gas volume can be compressed when liquid flows in.

6. Bearing according to claim 5, **characterised in that** in the housing of the compensating volume device (20, 21), preferably in the factory and/or initial state, a defined gas volume (26) with a defined gas pressure is absorbed with a defined quantity of liquid.

7. Bearing according to any one of the preceding claims, **characterised in that** a hose and/or pipeline (18, 19) leads out of the compensating volume device (20, 21) which hose and/or pipeline is fluidically connected to a connection channel (6b, 7b) leading out of the associated chamber (6, 7), preferably a connection channel (6b, 7b) flowing in the elastomer body (4) or formed integrally therein and that cannot be compressed during pressurisation of the elastomer body (4).

8. Bearing according to claim 6, **characterised in that** shut-off device (22, 23) is integrated into the hose and/or pipeline (18, 19).

9. Bearing according to any one of the preceding claims, **characterised in that** the first bearing part (2) forms an outer bearing part in which the second bearing part (3) is received as an inner bearing part through at least one of the elastomer bodies (4).

10. Bearing according to claim 9, **characterised in that** two chambers (6, 7) filled with liquid are provided which viewed in cross-section are arranged substantially on opposite sides of the inner bearing part.

11. Bearing according to any one of the preceding claims, **characterised in that** the chambers (6, 7) are fluidically decoupled and/or independently of their respective flow connection are fluidically connected to the respective compensating volume device (20, 21) with at least one outflow device (12) between the chambers (6, 7) forming the flow channel.

12. Bearing according to claim 11, **characterised in that** the at least one flow channel (12) extends at least partially into the elastomer body (4).

13. Bearing according to claim 12, **characterised in that** a channel section (6a, 7a) leads out of each of the chambers (6, 7), preferably one flowing into the elastomer body (4) or formed integrally therein and with a pressurisation of the elastomer body (4) out of a non-compressible channel section (6a, 7a) of the flow channel (12), wherein the channel sections (6a, 7a) flow into a connection section (10) of the flow channel (12) which preferably flows outside of the elastomer body (4), wherein it is preferably provided that the valve unit (11) is integrated in the connection section (10) for shutting off or regulating the flow through the flow channel (12).

14. Bearing according to any one of the preceding claims, **characterised in that** the valve unit (11) for shutting off or regulating the flow through the outflow device (12) is formed by a flow control valve, preferably an electrically operated flow control valve, by means of which the flow cross-section and thus the flow through the outflow device (12) can be adjusted and/or changed depending on a damping parameter that can be defined by a control unit (17).

15. Method for changing the position of a bearing, in particular a suspension bearing, in a vehicle, in particular in a motor vehicle, with a hydraulically damped bearing according to any one of the preceding claims,
**characterised in that**
for changing the position (path adjustment) of the bearing (1), the valve unit (11) coupled to the outflow device (12) and thus the flow connection is closed between the chambers (6, 7), **in that** furthermore a shut-off device (23) associated with a first chamber (7) is moved into the open position and a shut-off device (22) associated with a second chamber (6) is moved into the closed position so that in the case of a relative movement of the first bearing part (3) relative to the second bearing part (4) and a consequent pressure load of the first chamber (7), liquid flows out of the first chamber (7) into the compensating volume device (21), while at the same time the second chamber (6) loaded with tension feeds liquid out of the compensating volume device (20) associated with the second chamber (6) and the bearing (1) is moved in the direction of the first chamber (7).

## Revendications

1. Palier à amortissement hydraulique pour un châssis d'un véhicule, en particulier d'un véhicule automobile, avec un premier élément de palier, qui est relié à un premier composant, et avec un deuxième élément de palier, qui est relié à un deuxième composant, dans lequel au moins un corps élastomère est agencé entre le premier élément de palier et le deuxième élément de palier, lequel délimite au moins en partie au moins deux chambres reliées l'une à l'autre du point de vue de la technique d'écoulement au moyen d'un dispositif de débordement ainsi que remplies d'un fluide de sorte que lors d'un mouvement relatif entre le premier et le deuxième élément de palier et d'une charge de pression et/ou compression qui en résulte d'au moins une chambre, le fluide déborde de cette au moins une chambre par le biais de l'au moins un dispositif de débordement dans l'au moins une autre chambre sollicitée de préférence en traction, dans lequel le dispositif de débordement (12) est couplé pour le réglage de la caractéristique d'amortissement du palier avec un dispositif de soupape (11) pour la coupure ou la régulation du débit par le dispositif de débordement (12), **caractérisé en ce que** chacune des chambres (6, 7) est couplée, avec un dispositif de volume de compensation (20, 21) pouvant être couplé au moyen d'un dispositif de coupure (22, 23), qui peut être relié du point de vue de la technique d'écoulement pour le réglage de la rigidité de palier avec le volume de chambre respectivement associé.

2. Palier selon la revendication 1, **caractérisé en ce**
**que** le dispositif de coupure (22, 23) associé à chaque dispositif de volume de compensation (20, 21) est couplé avec un dispositif de commande (17), de préférence un dispositif de commande électrique, au moyen duquel le dispositif de coupure (22, 23) peut être commandé en fonction d'états de palier définis de sorte que
a) dans une position ouverte du dispositif de coupure (22, 23), la liaison d'écoulement entre le dispositif de volume de compensation (20, 21) et la chambre (6, 7) respectivement associée est libérée dans les deux directions d'écoulement,
ou
b) dans une position fermée du dispositif de coupure (22, 23), la liaison d'écoulement entre le dispositif de volume de compensation (20, 21) et la chambre (6, 7) respectivement associée est bloquée dans une direction d'écoulement de sorte que seul du fluide du dispositif de volume de compensation (20, 21) peut entrer dans la chambre (6, 7) respectivement associée.

3. Palier selon la revendication 1 ou 2, **caractérisé en ce que** le dispositif de coupure (22, 23) est formé respectivement par une soupape antiretour ouvrable au moyen d'un dispositif de commande, qui dans la position fermée bloque le débit en direction du dispositif de volume de compensation (20, 21) et le libère en direction de la chambre (6, 7) respectivement associée.

4. Palier selon la revendication 3, **caractérisé en ce que** la soupape antiretour (22, 23), de préférence une soupape antiretour sollicitée par ressort, est réalisée de sorte qu'elle libère dans la position fermée le débit en direction de la chambre (6, 7) respectivement associée seulement en fonction de l'atteinte d'une valeur seuil définie, de préférence d'une différence de pression définie entre le dispositif de volume de compensation (20, 21) et la chambre (6, 7) associée, de manière préférée entre toutes seulement après le dépassement d'une valeur seuil de dépression dans la chambre (6, 7) sollicitée en traction.

5. Palier selon l'une quelconque des revendications précédentes, **caractérisé en ce que** le dispositif de volume de compensation (20, 21) présente un boîtier (24), dans lequel un volume de gaz (26) est reçu, qui est séparé du volume de fluide (27) pouvant y être reçu ou qui y est reçu au moyen d'un élément de séparation, en particulier au moyen d'une membrane souple et/ou élastique (25) de sorte que le volume de gaz peut être compressé lors de l'entrée de fluide.

6. Palier selon la revendication 5, **caractérisé en ce que** dans le boîtier du dispositif de volume de compensation (20, 21), par rapport à l'état de fabrication et/ou de départ, un volume de gaz (26) défini avec une pression de gaz définie est reçu conjointement avec une quantité de fluide définie.

7. Palier selon l'une quelconque des revendications précédentes, **caractérisé en ce qu'**une conduite de tuyau et/ou de tube (18, 19) part du dispositif de volume de compensation (20, 21), laquelle est reliée par écoulement à un canal de liaison (6b, 7b) partant de la chambre (6, 7) associée, de préférence à un canal de liaison (6b, 7b) s'étendant dans le corps élastomère (4) ou réalisé d'un seul tenant à ce niveau ainsi que non compressible lors d'une sollicitation en pression du corps élastomère (4).

8. Palier selon la revendication 6, **caractérisé en ce que** le dispositif de coupure (22, 23) est intégré dans la conduite de tuyau et/ou de tube (18, 19).

9. Palier selon l'une quelconque des revendications précédentes, **caractérisé en ce que** le premier élément de palier (2) réalise un élément extérieur de palier, dans lequel le deuxième élément de palier (3) est reçu en tant qu'élément intérieur de palier par l'intermédiaire d'au moins un corps élastomère (4).

10. Palier selon la revendication 9, **caractérisé en ce que** deux chambres (6, 7) remplies de fluide sont prévues, qui, vues dans la coupe transversale, sont agencées sensiblement sur des côtés opposés de l'élément intérieur de palier.

11. Palier selon l'une quelconque des revendications précédentes, **caractérisé en ce que** les chambres (6, 7) sont découplées du point de vue de la technique d'écoulement et/ou sont reliées du point de vue de la technique d'écoulement indépendamment de leur liaison d'écoulement respective au dispositif de volume de compensation (20, 21) respectivement associé à au moins un canal d'écoulement réalisant le dispositif de débordement (12) entre les chambres (6, 7).

12. Palier selon la revendication 11, **caractérisé en ce que** l'au moins un canal d'écoulement (12) s'étend au moins en partie dans le corps élastomère (4).

13. Palier selon la revendication 12, **caractérisé en ce que** respectivement une section de canal (6a, 7a), de préférence une section de canal (6a, 7a) du canal d'écoulement (12) s'étendant dans le corps élastomère (4) ou réalisé d'un seul tenant à ce niveau ainsi que non compressible lors d'une sollicitation en pression du corps élastomère (4) part des chambres (6, 7), dans lequel les sections de canal (6a, 7a) débouchent dans une section de liaison (10) du canal d'écoulement (12) s'étendant de préférence à l'extérieur du corps élastomère (4), dans lequel il est prévu de préférence que le dispositif de soupape (11) est intégré dans la section de liaison (10) pour la coupure ou la régulation du débit par le canal d'écoulement (12).

14. Palier selon l'une quelconque des revendications précédentes, **caractérisé en ce que** le dispositif de soupape (11) est formé pour la coupure ou régulation du débit par le dispositif de débordement (12) par une soupape d'étranglement, de préférence une soupape d'étranglement à commande électrique, au moyen de laquelle la section transversale d'écoulement et ainsi le débit peut être réglé et/ou modifié par le dispositif de débordement (12) en fonction de paramètres d'amortissement pouvant être prédéfinis au moyen d'un dispositif de commande (17).

15. Procédé de modification de la position d'un palier, en particulier d'un palier de châssis, dans un véhicule, en particulier dans un véhicule automobile, avec un palier à amortissement hydraulique selon l'une quelconque des revendications précédentes,
**caractérisé en ce**
**que** pour la modification de la position (réglage de trajet) du palier (1), le dispositif de soupape (11) couplé avec le dispositif de débordement (12) et ainsi la liaison d'écoulement entre les chambres (6, 7) est coupé,
**qu'**en outre un dispositif de coupure (23) associé à une première chambre (7) est amené dans la position ouverte et un dispositif de coupure (22) associé à une deuxième chambre (6) est amené dans la position fermée de sorte que lors d'un déplacement relatif du premier élément de palier (3) par rapport au deuxième élément de palier (4) et d'une charge de pression qui en résulte de la première chambre (7), du fluide de la première chambre (7) entre dans le dispositif de volume de compensation (21), pendant qu'en même temps la deuxième chambre (6) sollicitée en traction aspire du fluide du dispositif de volume de compensation (20) associé à la deuxième chambre (6) et le palier (1) est déplacé en direction de la première chambre (7).
